# EUROPEAN PATENT APPLICATION

(11) **EP 3 192 710 A1**
(43) Date of publication of application: **19.07.2017**
(21) Application number: 16151617.4
(22) Date of filing: 15.01.2016
(51) Int. Cl.: B60R 25/10

(54) **AUTOMOTIVE ELECTRONIC ALARM SYSTEM**

(71) Applicant: FCA Italy S.p.A., 10135 Torino (IT)
(72) Inventor: STOENESCU, Bogdan, 10135 TORINO (IT)
(74) Representative: Bergadano, Mirko

(57) **Abstract**

An automotive electronic alarm system (1) for a motor vehicle (2), comprising a fuel level sensor (6) arranged in a fuel tank (3) of the motor vehicle (2) to output an electrical signal indicating fuel level in the fuel tank (3); and an electronic control and processing unit (9) configured to receive and process the electrical signal from the fuel level sensor (6) to determine an alarm condition on the basis of the received electrical signal. The fuel level sensor (6) is designed to output an electrical signal also indicating amplitude of oscillations/ripples of a free surface of the fuel in the fuel tank (3), and the electronic control and processing unit (9) is configured to determine the alarm condition on the basis of the amplitude of the oscillations of the free surface of the fuel in the fuel tank (3).

## Description

### Technical Field of the Invention

The present invention relates to an automotive electronic alarm system.

### State of the art

As is known, a great variety of automotive electronic alarm systems based on different technologies is available on the market. Exemplarily, reference may be made to the solutions disclosed in DE 2928328, DE 3021492, FR 2494649, BE 1008825 and US 4010444.

### Object and Summary of the Invention

The Applicant has verified that the automotive electronic alarm systems currently available on the market are often designed to signal the occurrence of a certain situation or of a certain category of situations, but are often not able to encompass all the situations that may require an alarm signal.

The object of the present invention is to provide an improved automotive electronic alarm system compared with those currently on the market, and in particular capable of signalling the occurrence of situations such as door opening, occupants entering/sitting in the passenger compartment, lifting the motor vehicle on jacks or mobile platforms, dragging the motor vehicle, etc.

The present invention therefore provides an automotive electronic alarm system as defined in the appended claims.

### Brief Description of the Drawings

Figure 1 shows an automotive alarm system according to the present invention; and
Figures 2 and 3 show a submersible fuel pump assembly arranged in a fuel tank of a motor vehicle and comprising a fuel level sensor operatively coupled to a float.

### Detailed Description of Preferred Embodiments of the Invention

The present invention will now be described in detail with reference to the accompanying drawings to enable a person skilled in the art to implement and use it. Various modifications to the described embodiment will be immediately apparent to the person skilled in the art. The described generic principles may be applied to other embodiments and applications without thereby departing from the protective scope of the present invention, as defined in the appended claims. Therefore, the present invention is not limited to the embodiments here described and shown, but has the widest possible scope in compliance with the principles and features here described and claimed.

In broad outline, the present invention originates from an Applicant's experimental observation according to which the float fuel level sensors currently integrated in submersible fuel pump assemblies in fuel tanks of motor vehicles, although used only to measure the fuel level in the tank, are in fact also able to measure the amplitude of oscillations/ripples of the fuel free surface in the fuel tank caused by vibrations occurring and propagating on the motor vehicle in situations such as the opening of a door, an occupant entering or sitting in the passenger compartment, the lifting of the motor vehicle by means of jacks or mobile platforms, the dragging of the motor vehicle, etc.

It is therefore possible to exploit this capacity of the existing fuel level sensors to provide automotive electronic alarm systems detecting and warning of the occurrence of the above-described situations on the basis of the amplitude of the oscillations/ripples of the fuel free surface in the tank.

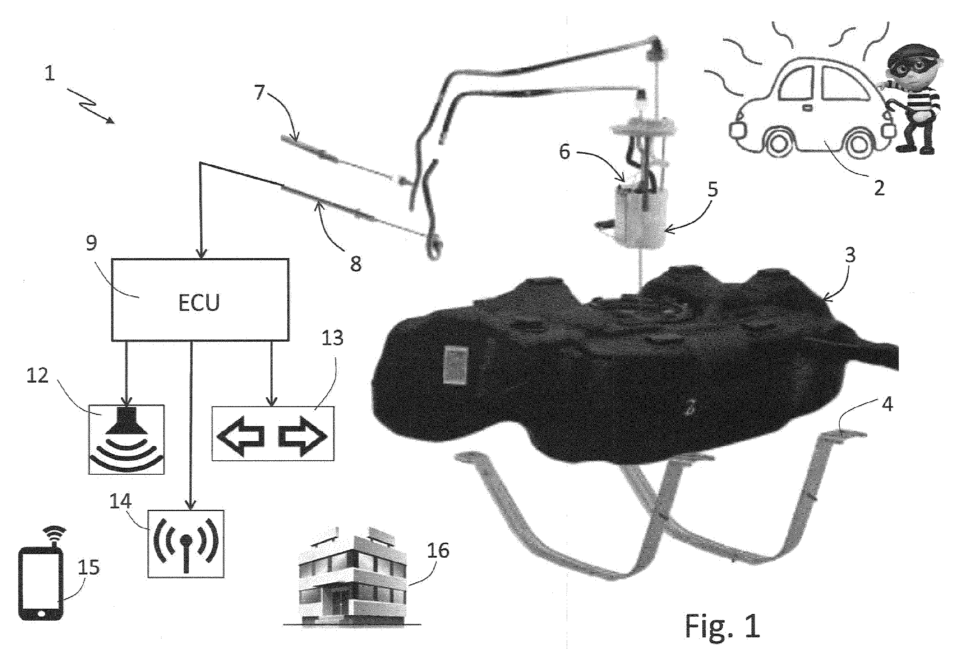

Figure 1 schematically shows and designated as a whole with 1 an automotive electronic alarm system according to the present invention.

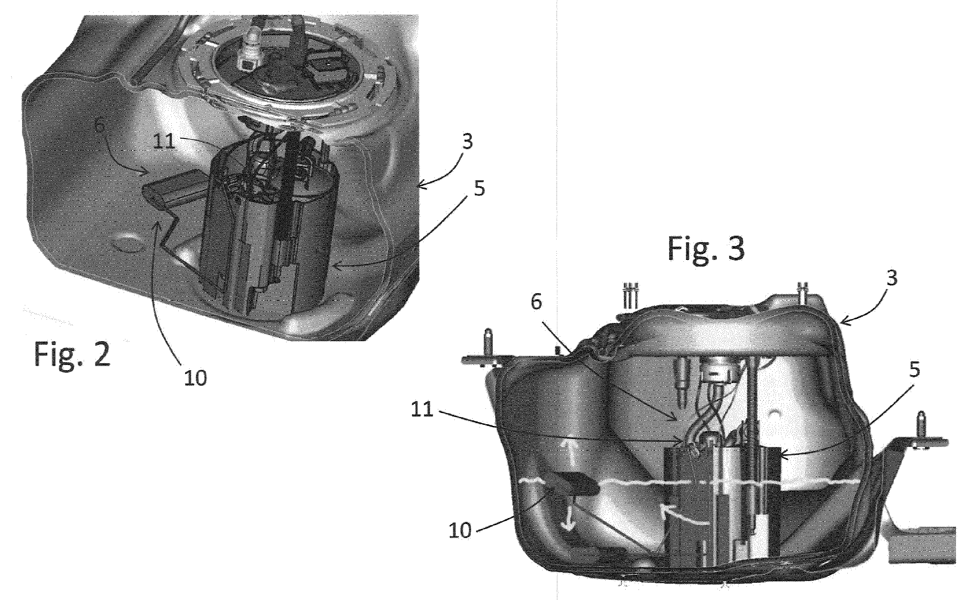

In Figure 1, reference numeral 2 designates a motor vehicle equipped with a fuel tank 3 coupled to a frame (not shown) of the motor 2 by means of special straps 4 and housing a submersible fuel pump assembly 5 integrating a float-type fuel level sensor 6 (see also Figures 2 and 3) which generates an electrical signal indicating both the fuel level in the tank 3 and the amplitude of any oscillations or ripples of the fuel free surface in the tank 3.

The fuel pump assembly 5 is further provided with a fluidic connection 7 for supplying the fuel contained in the tank 3 to a fuel injection system (not shown) of the motor vehicle 2, as well as with an electrical connection for supplying electrical power to the fuel pump assembly 5 and to the fuel level sensor 6 and for electrically coupling them to an electronic control and processing unit (CPU/ECU) 9.

Figures 2 and 3 show in greater detail the fuel pump assembly 5 and the fuel level sensor 6 integrated therein and comprising a mobile float 10 mounted to the fuel pump assembly 5 to track the changes in the fuel level and any possible oscillation/ripple of the fuel free surface, and a position/displacement transducer 11 operatively coupled to the float 10 to generate the electrical signal indicating both the fuel level in the tank 3 and the amplitude of the oscillations/ripples of the fuel free surface in the tank 3. In particular, Figure 2 shows the position taken by the float 10 when the fuel tank 3 is empty, while Figure 3 shows comparatively the two positions taken by the float 10 when the fuel tank 3 is empty (lower position) and when it contains a certain amount of fuel (higher position).

The electronic control and processing unit 9 may alternatively be formed by an electronic control and processing unit dedicated to implement the alarm function, by an electronic control and processing unit implementing also other functions, for example the engine control unit, or by an on-board computer of the motor vehicle 2.

Besides controlling the fuel pump assembly 5 in a known manner, not described in detail, the electronic control and processing unit 9 is configured to receive and process the electrical signal supplied by the fuel level sensor 6 to determine, on the one hand, the fuel level in the fuel tank 3 and, on the other hand, the amplitude of any oscillations/ripples of the free surface of the fuel in the tank 3.

The electronic control and processing unit 9 is also configured to determine an alarm condition based on the amplitude of the oscillations/ripples of the fuel free surface in the tank 3, in particular when the amplitude of the oscillations/ripples exceeds a certain calibrated threshold.

The electronic control and processing unit 9 is also configured to cause operation of one or different on-board signalling devices of the motor vehicle 2 in response to the detection of the alarm condition.

Conveniently, the on-board signalling devices comprise an acoustic signalling device 12, e.g. in the form of a dedicated horn or represented by the vehicle horn, and a visual signalling device 13, for example represented by the direction indicators or the headlights of the motor vehicle, which are operated to light up intermittently, or by a separate dedicated device.

The electronic control and processing unit 9 is also configured to operate one or different remote signalling devices and/or an assistance/intervention service in response to the alarm condition.

To this purpose, the electronic control and processing unit 9 is configured to transmit, through an on-board radio transmitter 14 of the motor vehicle 2, an activation signal that can be directed to a personal electronic smart mobile communication device 15, like a smartphone or a tablet, to activate its acoustic and/or visual and/or haptic (vibration) warning devices, and/or to an operating centre 16 providing the intervention or the assistance agreed with the operating centre.

Finally, it is clear that the invention here described and shown can be subject to modifications and variations without thereby departing from the protective scope of the present invention, as defined in the appended claims.

For example, although the float-type is currently the only one used in the automotive field for the fuel level sensors, the present invention may also be implemented by using different types of fuel level sensors which, in the future, will be developed or used for this purpose, provided of course that these fuel level sensors are able to measure both the fuel level in the tank and the amplitude of the oscillations/ripples of the fuel free surface in the fuel tank.

Analogously, the present invention may also be implemented by using fuel level sensors not integrated in submersible fuel pump assemblies, but separately arranged in the tank.

## Claims

1. An automotive electronic alarm system (1) for a motor vehicle (2), comprising:
a fuel level sensor (6) arranged in a fuel tank (3) of the motor vehicle (2) to output an electrical signal indicating fuel level in the fuel tank (3); and
an electronic control and processing unit (9) configured to receive and process the electrical signal from the fuel level sensor (6) to determine an alarm condition on the basis of the received electrical signal;
wherein the fuel level sensor (6) is designed to output an electrical signal also indicating amplitude of oscillations/ripples of a free surface of the fuel in the fuel tank (3);
and wherein the electronic control and processing unit (9) is configured to determine the alarm condition on the basis of the amplitude of the oscillations of the free surface of the fuel in the fuel tank (3).

2. Automotive electronic alarm system according to claim 1, wherein the electronic control and processing unit (9) is further configured to determine the alarm condition when the amplitude of the oscillations of the free surface of the fuel exceeds a predetermined threshold.

3. Automotive electronic alarm system according to claim 1 or 2, wherein the electronic control and processing unit (9) is further configured to operate one or different on-board acoustic/visual signalling devices (12, 13) of the motor vehicle (2) in response to the determination of the alarm condition.

4. Automotive electronic alarm system according to any one of the preceding claims, wherein the electronic control and processing unit (9) is further configured to operate one or different remote acoustic/visual/haptic signalling devices (15, 16) and/or an assistance/intervention service in response to the alarm condition.

5. Automotive electronic alarm system according to any one of the preceding claims, wherein the fuel level sensor (6) is of a float type.

6. A motor vehicle (2) comprising a fuel tank (3), a fuel level sensor (6) in the fuel tank (3) to output an electrical signal indicating fuel level in the fuel tank (3); and an electronic alarm system (1) according to any one of the preceding claims.

7. A motor vehicle according to claim 6, wherein the fuel level sensor (6) is of a float type.

8. A motor vehicle according to claim 6 or 7, further comprising a submersible fuel pump assembly (5) in the fuel tank (3) and integrating the fuel level sensor (6).

9. Use of an electrical signal from a fuel level sensor (6) in a fuel tank (3) of a motor vehicle (2) and indicating the fuel level in the fuel tank (3) and an amplitude of oscillations of a free surface of the fuel in the fuel tank (3) in an automotive electronic alarm system (1) to determine an alarm condition on the basis of the amplitude of the oscillations of the fuel free surface.

10. Software loadable in an electronic control and processing unit (9) in an automotive electronic alarm system (1) and designed to cause, when executed, the electronic control and processing unit (9) to become configured as claimed in any one of claims 1 to 5.
